# EUROPÄISCHE PATENTSCHRIFT

(11) **EP 2 954 816 B1**
(45) Veröffentlichungstag und Bekanntmachung des Hinweises auf die Patenterteilung: **19.02.2020**
(21) Anmeldenummer: 15001548.5
(22) Anmeldetag: 20.05.2015
(51) Int. Cl.: A47L 9/12, B01D 46/52

(54) **FILTEREINHEIT FÜR EINEN STAUBSAUGER UND STAUBSAUGER MIT EINER SOLCHEN FILTEREINHEIT**
FILTER UNIT FOR A VACUUM CLEANER AND VACUUM CLEANER WITH SUCH A FILTER UNIT
UNITÉ DE FILTRE POUR UN ASPIRATEUR ET ASPIRATEUR DOTÉ D'UNE TELLE UNITÉ DE FILTRE

(30) Priorität: 10.06.2014 DE 102014108089
(43) Veröffentlichungstag der Anmeldung: 16.12.2015
(73) Patentinhaber: Miele & Cie. KG, 33332 Gütersloh (DE)
(72) Erfinder: Hunnekuhl, Christian, 49134 Wallenhorst (DE); Becker, Diethard, 33613 Bielefeld (DE)

(56) Entgegenhaltungen:
- DE-A1-102009 035 602
- DE-A1-102011 017 792
- GB-A- 2 280 388
- US-A1- 2012 047 683

## Beschreibung

### Filtereinheit für einen Staubsauger und Staubsauger mit einer solchen Filtereinheit

Die Erfindung betrifft eine Filtereinheit für einen Staubsauger, insbesondere eine in dem Staubsauger als Zentralfiltereinheit fungierende Filtereinheit, wobei die Filtereinheit ein hohlzylindrisch geformtes und Falten aufweisendes Filtermedium sowie einen drehbaren Abstreifer zum Abreinigen der Falten umfasst. Das hohlzylindrisch geformte und Falten aufweisende Filtermedium wird im Folgenden als hohlzylindrisches Filtermedium bezeichnet. Im Weiteren betrifft die Erfindung auch einen Staubsauger mit einer solchen Filtereinheit.

Eine solche Filtereinheit ist an sich bekannt. Zum Beleg des Standes der Technik wird auf die US 2005/183233 A1 und auf die US2012/047683 verwiesen. Nachteilig bei der bekannten Filtereinheit ist jedoch der nicht unerhebliche Aufwand, der mit der exakten Positionierung der Achse des Abstreifers einhergeht.

Bei der US 2005/183233 A1 ist die Achse des Abstreifers im Bereich einer oberen Stirnseite des Filtermediums an einem Deckel sowie im Bereich einer unteren Stirnseite des Filtermediums an einem Steg gelagert. Für eine ordnungsgemäße Drehbarkeit des Abstreifers ist es erforderlich, dass die beiden Lager exakt übereinander positioniert sind, so dass eine Mittellängsachse des Abstreifers mit einer Mittellängsachse des Filtermediums zusammenfällt. Speziell bei einem mit dem Filtermedium verklebten Deckel lässt sich dies nicht immer gewährleisten.

Sowohl die DE 10 2009 035 602 A1 als auch die DE 10 2001 017 792 A1 offenbaren eine Achse des Abstreifers, die an einer Stirnseite an einem Deckel der Filtereinheit und an einer anderen Stirnseite an einem Steg des Gehäuses der Filtereinheit gelagert ist. In beiden Fällen ist eine exakte Positionierung der beiden Lager zueinander erforderlich.

Der Erfindung stellt sich somit das Problem, eine Filtereinheit der eingangs genannten Art anzugeben, mit der sich das skizzierte Problem vermeiden oder zumindest hinsichtlich der Auswirkungen reduzieren lässt.

Erfindungsgemäß wird dieses Problem mittels einer Filtereinheit der eingangs genannten Art mit den Merkmalen des Patentanspruchs 1 gelöst. Dabei ist vorgesehen, dass eine Achse des Abstreifers nur einseitig in einem die Filtereinheit abschließenden Deckelteil gelagert ist und dass an einem freien Ende der Achse ein ringförmiges und sich an den Innenseiten des Filtermediums abstützendes Element als zweite Lagerstelle der Achse des Abstreifers fungiert. Die Achse weist an einem freien Ende ein ringförmiges Element auf, wobei sich das ringförmige Element an den Innenseiten des Filtermediums abstützt und als zweite Lagerstelle der Achse des Abstreifers fungiert.

Mit dem Entfall der bisher stets erforderlichen zweiten Lagerstelle der Achse des Abstreifers entfällt die Notwendigkeit einer exakten Ausrichtung zweier Lagerstellen zueinander. Das sich an den Innenseiten des Filtermediums abstützende ringförmige Element übernimmt die Funktion der zweiten Lagerstelle und positioniert sich beim Drehen des Abstreifers jeweils selbsttätig im Innenraum des hohlzylindrischen Filtermediums. Das die Filtereinheit abschließende Deckelteil kann jetzt ohne die Notwendigkeit einer Justierung der dort gebildeten Lagerstelle für die Achse des Abstreifers relativ zu einer anderen Lagerstelle am Filtermedium angebracht werden, insbesondere mit dem Filtermedium verklebt werden. Es kommt einzig auf eine im Wesentlichen mittige Positionierung der dortigen Lagerstelle über dem Zentrum des Innenraums des hohlzylindrischen Filtermediums an. Dadurch ergibt sich eine erhebliche Fertigungsvereinfachung. Weiterhin wird der Aufwand bei der Produktionskontrolle reduziert und schließlich resultiert ein geringerer Produktionsausschuss, weil eine Nichtverwendbarkeit einer Filtereinheit aufgrund einer fehlerhaften Positionierung oder Justierung des Abstreifers im Grunde nicht mehr vorkommen kann.

Vorteilhafte Ausgestaltungen und Weiterbildungen der Erfindung ergeben sich aus den nachfolgenden Unteransprüchen. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform der Filtereinheit zeichnet sich diese durch einen dem Deckelteil gegenüberliegenden offenen oder zumindest im Wesentlichen offenen Bodenbereich aus. Auf diese Weise ist gewährleistet, dass bei einer senkrecht in einen Staubsauger eingesetzten Filtereinheit dort mittels des Abstreifers gelöster Staub zwischen den Falten des Filtermediums herabfallen kann. Der gelöste Staub gelangt damit in einen insbesondere strömungsberuhigten Bereich unterhalb der Filtereinheit, so dass gelöster Staub nicht erneut angesaugt wird und sich nicht erneut an der Oberfläche des Filtermediums absetzt. Auf diese Weise erhöht sich die Standzeit des Filtermediums der Filtereinheit deutlich.

Bei einer weiteren Ausführungsform der Filtereinheit fungiert ein Bodenring mit einem inneren und einem äußeren Durchmesser einerseits zur Fixierung der Falten des Filtermediums in einem der Stirnseite mit dem Deckelteil gegenüberliegenden Bodenbereich und andererseits als Dichtelement zum luftdichten Anschluss der Filtereinheit an ein reinluftseitiges Luftleitelement eines Staubsaugers. Der innere Durchmesser des Bodenrings entspricht in etwa dem inneren Durchmesser des hohlzylindrischen Filtermediums. Der äußere Durchmesser des Bodenrings ist größer als der innere Durchmesser des hohlzylindrischen Filtermediums und kleiner, insbesondere deutlich kleiner, als der äußere Durchmesser des hohlzylindrischen Filtermediums. Damit deckt der Bodenring nur einen Teil der bodenseitigen Stirnfläche des Filtermediums ab. Auf diese Weise wird der offene oder zumindest im Wesentlichen offene Bodenbereich der Filtereinheit realisiert. Die Besonderheit liegt in der Doppelfunktion des Bodenrings, indem dieser gleichzeitig zur Fixierung der Falten sowie zum Anschluss der Filtereinheit an und zur Abdichtung gegen das reinluftseitige Luftleitelement eines Staubsaugers wirksam ist. Die mit dem Bodenring erreichte Fixierung der Falten des Filtermediums bewirkt einen regelmäßigen Abstand derselben, so dass der Abstreifer zwischen die Falten greifen kann.

In einer bevorzugten Ausführungsform ist das ringförmige Element einstückig ausgeführt und ist entlang der Achse des Abstreifers in einer Ebene angeordnet. Eine solche Ausführungsform des Abstreifers und des an dessen Ende befindlichen ringförmigen Elements ist bei einem in einem Spritzgussverfahren hergestellten Abstreifer werkzeugtechnisch einfacher realisierbar. Alternativ ist es denkbar, das ringförmige Element der Filtereinheit aus zumindest zwei kreissektorförmigen Abschnitten in entlang der Achse des Abstreifers unterschiedlichen Ebenen auszubilden.

Bei einer nochmals weiteren Ausführungsform der Filtereinheit weist der Abstreifer ein mit seiner Achse verbindbares oder verbundenes, insbesondere einstückig verbundenes Stirnrad zum Antrieb der Achse und damit zum Antrieb des Abstreifers insgesamt auf. Ein solches Stirnrad wirkt direkt auf die Achse des Abstreifers und jede Drehung des Stirnrads führt zu einer Drehung des Abstreifers.

Bei einer Filtereinheit mit einem Filtermedium mit einer geschlossenen Plissierung resultiert ein vergleichsweise großer Abstand zwischen den einzelnen Falten des Filtermediums, so dass auf diese Weise das Herabfallen des an der Oberfläche des Filtermediums angelagerten Staubs durch das Filtermedium selbst nicht oder kaum behindert wird und dadurch eine besonders effiziente Abreinigung des Filtermediums mit der damit einhergehenden erhöhten Standzeit des Filtermediums erfolgt.

Insgesamt ist die Erfindung auch ein Staubsauger mit einer Filtereinheit wie hier und im Folgenden beschrieben. Eine besondere Ausführungsform eines solchen Staubsaugers zeichnet sich durch einen unterhalb der Filtereinheit gebildeten Auffangbereich für vom Filtermedium mittels des Abstreifers abgereinigten (herabfallenden) Staub aus. Der Auffangbereich kann vom Verwender des Staubsaugers von Zeit zu Zeit geleert werden. Insoweit kommt in Betracht, dass ein Gehäuse des Staubsaugers im Auffangbereich eine Klappe oder dergleichen zum Leeren des Auffangbereichs aufweist.

Eine Ausführungsform eines Staubsaugers, die zur Verwendung mit einer Filtereinheit mit einem Bodenrings mit der oben beschriebenen Doppelfunktion bestimmt ist, zeichnet sich dadurch aus, dass die Filtereinheit mit ihrem Bodenring auf das reinluftseitige Luftleitelement aufsteckbar oder aufgesteckt ist. Das reinluftseitige Luftleitelement ist dafür an seinem zur Kombination mit der Filtereinheit vorgesehenen Ende zum Beispiel konisch geformt oder angefast.

Ein Ausführungsbeispiel der Erfindung ist in den Zeichnungen rein schematisch dargestellt und wird nachfolgend näher beschrieben. Einander entsprechende Gegenstände oder Elemente sind in allen Figuren mit den gleichen Bezugszeichen versehen. Das Ausführungsbeispiel ist nicht als Einschränkung der Erfindung zu verstehen. Vielmehr sind im Rahmen der vorliegenden Offenbarung durchaus auch Änderungen und Modifikationen möglich, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- Figur 1: eine Filtereinheit der hier vorgeschlagenen Art in einem teilweise gezeigten Staubsauger,
- Figur 2: ein Filtermedium einer Filtereinheit gemäß Figur 1 in einer geschnittenen Draufsicht,
- Figur 3: eine Filtereinheit gemäß Figur 1 in einer teilweise geschnittenen isometrischen Ansicht und
- Figur 4: eine Filtereinheit gemäß Figur 1 in einer geschnittenen Seitenansicht.

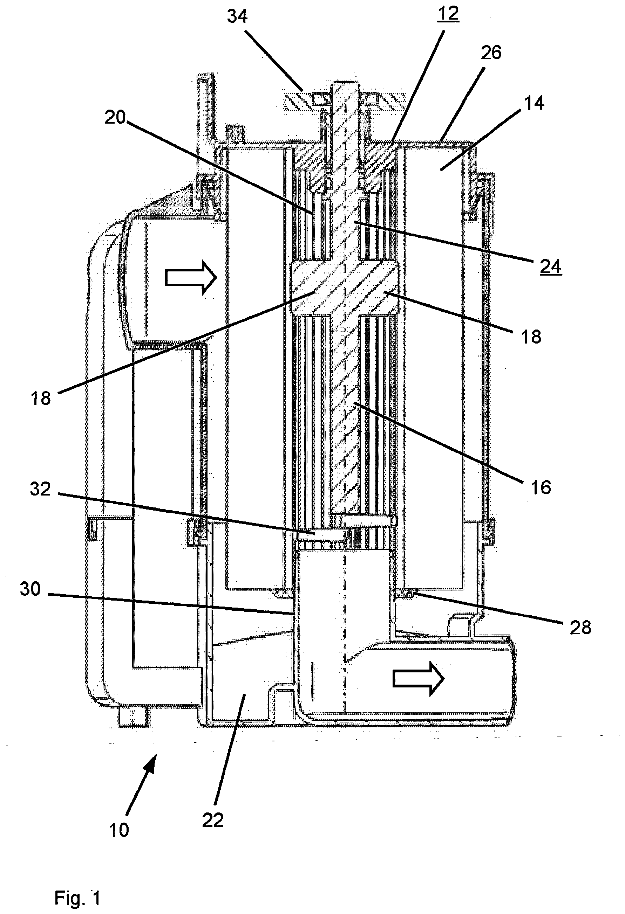

Die Darstellung in Figur 1 zeigt in einer Schnittdarstellung einen Teil eines Staubsaugers 10 mit einer Filtereinheit 12 der hier vorgeschlagenen Art. Bei dem Staubsauger 10 handelt es sich um einen Staubsauger 10 mit einem hier nicht gezeigten, aber an sich bekannten Zyklonabscheider und die Filtereinheit 12 ist dem Zyklonabscheider stromabwärts nachgeschaltet. Der obere Blockpfeil veranschaulicht die Strömungsrichtung der Saugluft im Anschluss an den Zyklonabscheider in Richtung auf die Filtereinheit 12.

Die Filtereinheit 12 umfasst ein zylindrisch (hohlzylindrisch) geformtes Filtermedium 14 und eine drehbar gelagerte Achse 16. Die Achse 16 umfasst Mittel, nämlich hier seitliche, flügelartige Abstellungen 18 zum Abreinigen des Filtermediums 14. Die Abstellungen 18 greifen dabei in (in der Schnittdarstellung in Figur 1 im Wesentlichen nur anhand ihrer zum Inneren des Filtermediums 14 gewandten Kanten erkennbare) Falten 20 ein. Beim Drehen der Achse 16 schlagen die drehfest mit der Achse 16 verbundenen Abstellungen 18 an die Falten 20. Die oder jede Abstellung 18 weist relativ zum Durchmesser der inneren Hüllkontur des Filtermediums 14 ein Übermaß auf und fährt beim Drehen der Achse 16 mit ihrem freien Ende im Inneren der Filtereinheit 12 an den Falten 20 des Filtermediums 14 entlang. Entsprechend werden die Falten 20 bei einer Drehung der Achse 16 und der resultierenden propellerartigen Drehung der oder jeder Abstellung 18 verformt (mechanischer Impuls) und die sich damit ergebende Erschütterung der Falten 20 führt dazu, dass der Staub von der Oberfläche des Filtermediums 14 abgeworfen wird. Dabei fällt der Staub in Richtung eines im Staubsauger 10 unterhalb der Filtereinheit 12 gebildeten Auffangbereichs 22. Dort kann der abgeworfene Staub vom Verwender des Staubsaugers 10 von Zeit zu Zeit entsorgt werden. Im Folgenden wird die Gesamtheit aus Achse 16 und der oder jeder Abstellung 18 entsprechend der Funktion und der üblichen Terminologie als Abstreifer 24 bezeichnet.

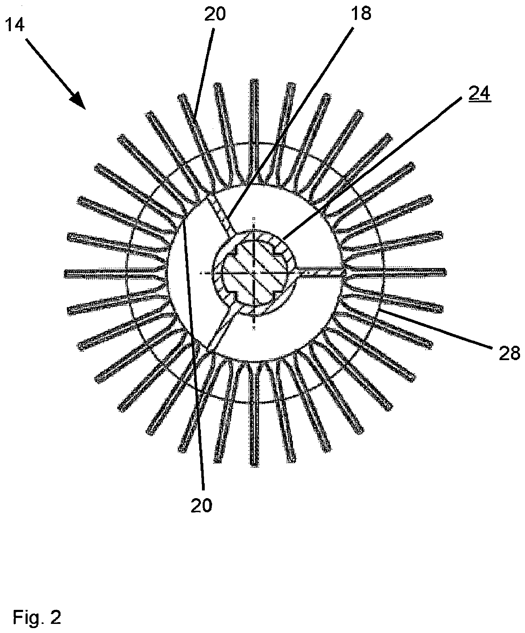

Bei der gezeigten Ausführungsform weist das Filtermedium 14 für die beschriebene Abreinigung mittels des Abstreifers 24 eine auch als Taschenverklebung bezeichnete sogenannte geschlossene Plissierung auf. Bei einer solchen - an sich bekannten - geschlossenen Plissierung handelt es sich um eine spezielle Faltenbildung, bei der die einzelnen Falten 20 direkt verklebt sind und über Abstandsprägungen auf einem definierten Abstand gehalten werden. Die Darstellung in Figur 2 zeigt in einer Schnittdarstellung mit einer Schnittebene quer zur Längsachse des Filtermediums 14 eine Draufsicht auf ein Filtermedium 14 mit einer solchen geschlossenen Plissierung und den sich dabei ergebenden Falten 20 (nur einzelne bezeichnet) sowie dem im Inneren drehbar angeordneten Abstreifer 24.

Die Filtereinheit 12 ist auf einer im in den Staubsauger 10 eingebauten Zustand als Oberseite fungierenden ersten Stirnseite mit einem Deckelteil 26 (Fig. 1) verschlossen, insbesondere indem die dortigen Kanten der Falten 20 mit der Innenseite des Deckelteils 26 dicht verklebt sind. Das Deckelteil 26 ist in der Darstellung in Figur 2 aufgrund der gewählten Lage der Schnittebene nicht gezeigt. Auf der dem Deckelteil 26 gegenüberliegenden Seite schließt die Filtereinheit 12 mit einem auch in Figur 2 erkennbaren Bodenring 28 ab. Das Deckelteil 26 dient zur Fixierung der Falten 20 des Filtermediums 14 und dichtet die Filtereinheit 12 auf der im eingebauten Zustand nach oben weisenden Stirnseite nach außen ab. Der auf der gegenüberliegenden und im eingebauten Zustand als Unterseite fungierenden zweiten Stirnseite befindliche Bodenring 28 dient ebenfalls zur Fixierung der Falten 20. Dafür ist der Bodenring 28 zum Beispiel ebenfalls mit den dortigen Kanten der Falten 20 verklebt. Darüber hinaus fungiert der Bodenring 28 auch als Verbindungs- und Dichtelement zu einem im Folgenden kurz als Ansaugrohr 30 bezeichneten reinluftseitigen Luftleitelement 30 des Staubsaugers 10. Beim Einsetzen der Filtereinheit 12 in den Staubsauger 10 wird diese mit dem Bodenring 28 über einem freien, insbesondere konisch geformten oder angefasten Ende des Ansaugrohrs 30 platziert und durch leichten Druck auf das Ende des Ansaugrohrs 30 aufgesteckt. Im Rahmen seiner durch die jeweiligen Materialeigenschaften gegebenen elastischen Verformbarkeit dichtet der Bodenring 28 damit die Filtereinheit 12 zum Ansaugrohr 30 ab. Der Bodenring 28 ist dafür aus einem zumindest in gewissem Umfang elastisch verformbaren Material, zum Beispiel Gummi, gefertigt. Alternativ oder zusätzlich kann auch vorgesehen sein, dass der Bodenring 28 eine innen umlaufende elastisch verformbare Dichtlippe aufweist.

Der in Figur 1 unten rechts gezeigte Blockpfeil veranschaulicht die Strömungsrichtung der in üblicher Art und Weise mittels eines hier nicht gezeigten Sauggebläses des Staubsaugers 10 angesaugten Saugluft in Richtung auf das Sauggebläse. Das Filtermedium 14 trennt also einen Reinluftbereich (im Inneren des Filtermediums 14 und im Ansaugrohr 30 sowie im Anschluss an das Ansaugrohr 30) vollständig von einem Schmutzluftbereich außerhalb der Filtereinheit 12. Wie schon zuvor beschrieben, ist die Filtereinheit 12 einem Zyklonabscheider nachgeschaltet und dient dazu, die Feinstaubfraktion des aufgesaugten Staubs aus dem angesaugten Luftstrom zu filtern. Die Filtereinheit 12 mit dem Filtermedium 14 wird dabei von außen (Fig. 1: Blockpfeil oben links) mit der verschmutzten Luft beaufschlagt. Aus dem Inneren der Filtereinheit 12 wird dann der gereinigte Luftstrom weiter zum Sauggebläse geführt (Fig. 1: Blockpfeil unten rechts).

Indem die Filtereinheit 12 auf ihrer Unterseite - also im Bodenbereich - mit dem auch als Dichtelement fungierenden Bodenring 28 abgeschlossen ist, ist der Bodenbereich der Filtereinheit 12 offen oder zumindest im Wesentlichen offen. Auf diese Weise kann mittels des Abstreifers 24 von den Falten 20 gelöster Staub in den Auffangbereich 22 fallen. Dies ist im Gegensatz zu einer Filtereinheit mit jeweils einem auf beiden Stirnseiten die Falten vollständig überdeckenden Deckel ein großer Vorteil der hier vorgestellten Lösung. Indem der Bodenring 28 auf der Unterseite der Filtereinheit 12 die Falten 20 nicht oder zumindest kaum abdeckt, kann mittels des Abstreifers 24 von den Falten 20 gelöster Staub zwischen den Falten 20 herabfallen. Bei bisherigen Lösungen, bei denen anstelle des Bodenrings 28 ein Bodenteil in der Größe des Deckelteils 26 tritt, lagert sich der von den Falten 20 gelöste und herabfallende Staub auf dem Bodenteil ab und gelangt damit zum einen nicht in den Auffangbereich 22 und wird zum anderen immer wieder auf die Oberfläche des Filtermediums 14 angesaugt und lagert sich dort an, so dass die beabsichtigte Abreinigung des Filtermediums 14 nur zum Teil erreicht wird. Demgegenüber wird mit der hier vorgestellten Lösung sichergestellt, dass der von den Falten 20 des Filtermediums 14 gelöste Staub in einen strömungsberuhigten Bereich unterhalb der Filtereinheit 12 fällt. Dort kann er zum einen leicht entsorgt werden und zum anderen ist gewährleistet, dass sich der gelöste Staub nicht wieder erneut an der Oberfläche des Filtermediums 14 anlagert. Auf diese Weise wird die Standzeit des Filtermediums 14 und die Verwendbarkeit der Filtereinheit 12 insgesamt deutlich erhöht.

Obwohl das Ausführungsbeispiel anhand einer geschlossenen Plissierung des Filtermediums 14 erläutert wurde, kommt grundsätzlich auch ein Filtermedium 14 mit einer geschlossenen Plissierung auf der als Unterseite fungierenden Stirnseite und mit einer offenen Plissierung auf der als Oberseite fungierenden Stirnseite in Betracht. Die offene Plissierung kann mit dem Deckelteil 26 luftdicht verschlossen werden. Die geschlossene Plissierung erlaubt - wie oben beschrieben - zusammen mit dem den Bodenbereich der Filtereinheit 12 freilassenden oder zumindest im Wesentlichen freilassenden Bodenring 28 das freie Herabfallen von gelöstem Staub.

Anhand der Darstellung in Figur 1 ist bereits erkennbar, dass die Achse 16 des Abstreifers 24 nur einseitig gelagert ist, und zwar in dem die Filtereinheit 12 abschließenden Deckelteil 26. An dem dem Deckelteil 26 gegenüberliegenden freien Ende der Achse 16 fungiert ein ringförmiges Element 32 als zweite Lagerstelle der Achse 16. Dies wird dadurch erreicht, dass ein Durchmesser des ringförmigen Element 32 so an den Innendurchmesser des hohlzylindrischen Filtermediums 14 angepasst ist, dass sich das ringförmige Element 32 einerseits im Inneren des Filtermediums 14 frei drehen und sich andererseits mit seiner Außenfläche oder seinen Außenflächen beim Drehen an den Innenseiten des Filtermediums 14 abstützen kann.

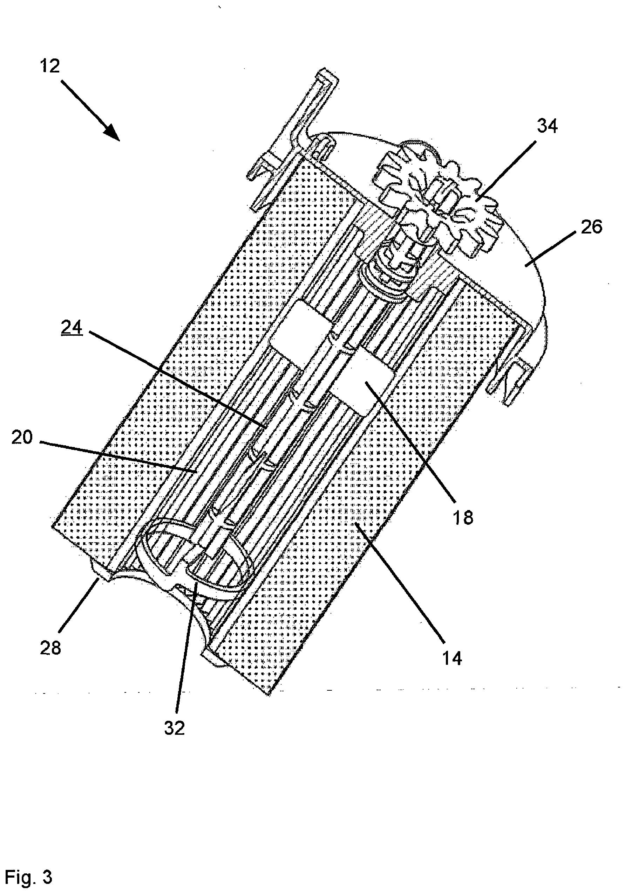

Die Gestalt des ringförmigen Elements 32 und die Größenverhältnisse in Relation zu dem im Inneren des hohlzylindrischen Filtermediums 14 freibleibenden Innenraum sind anhand der in Figur 3 gezeigten Schnittdarstellung noch besser erkennbar. Figur 3 zeigt die Filtereinheit 12 ohne den Staubsauger 10 in einer teilweise geschnittenen isometrischen Ansicht. Von dem Schnitt ist der Abstreifer 24 mit dem an seinem freien Ende befindlichen ringförmigen Element 32 nicht erfasst, so dass die ringförmige Gestalt gut erkennbar ist. Indem das ringförmige Element 32 als zweite Lagerstelle der Achse 16 und damit als zweite Lagerstelle des Abstreifers 24 insgesamt fungiert, ergibt sich eine deutliche Vereinfachung bei der Fertigung der Filtereinheit 12. Bei der bisherigen beidseitigen Lagerung der Achse 16 des Abstreifers 24 müssen die beiden Lagerstellen passend zueinander ausgerichtet sein, weil sonst die Drehbarkeit der Achse 16 nicht in jedem Falle gewährleistet ist. Mit dem ringförmigen Element 32 als zweiter Lagerstelle der Achse 16 positioniert sich der Abstreifer 24 beim Drehen selbsttätig, so dass eine Drehbarkeit der Achse 16 stets gewährleistet ist.

Bei der in Figur 3 gezeigten Ausführungsform ist auch erkennbar, dass das ringförmige Element 32 aus zumindest zwei - hier genau zwei - kreissektorförmigen Abschnitten in entlang der Achse 16 unterschiedlichen Ebenen gebildet ist. Bei zwei kreissektorförmigen Abschnitten ergeben sich ein erster und ein zweiter halbkreisförmiger Ring mit gleichem Durchmesser, deren Außenflächen sich beim Drehen des Abstreifers 24 jeweils an den Innenseiten des Filtermediums 14 abstützen.

Die Darstellung in Figur 3 zeigt auch ein bereits in Figur 1 erkennbares Stirnrad 34. Das Stirnrad 34 ist als Zahnrad ausgeführt und so mit der Achse 16 verbunden, insbesondere einstückig verbunden, dass aufgrund einer Drehung des Stirnrads 34 eine Drehung der Achse 16 und damit des Abstreifers 24 insgesamt resultiert. Das Stirnrad 34 wird bei einer in einen Staubsauger 10 (Fig. 1) eingesetzten Filtereinheit 12 mittelbar oder unmittelbar mittels eines von dem Staubsauger 10 umfassten Motors (nicht gezeigt) angetrieben. Eine im Deckelteil 26 an der Achse 16 des Abstreifers 24 anliegende Dichtlippe oder eine sonstige Dichtung sorgen für einen luftdichten Abschluss der Filtereinheit 12 im Bereich der als Lagerstelle des Abstreifers 24 fungierenden und einen Durchtritt der Achse 16 bis zum Stirnrad 34 erlaubenden zentralen Bohrung im Deckelteil 26. Das Stirnrad 34 fungiert selbst noch in gewissem Umfang als zusätzliche Lagerstelle der Achse 16.

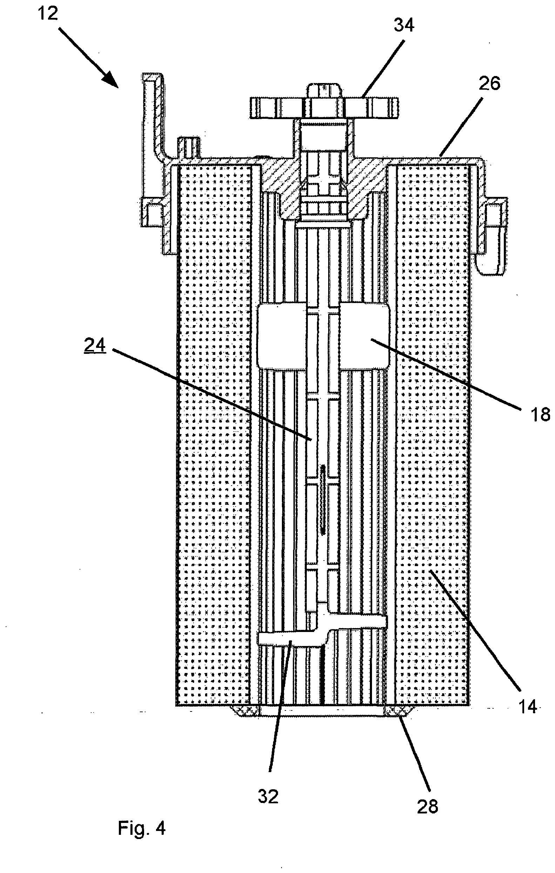

Die Darstellung in Figur 4 zeigt die Filtereinheit 12 in einer Schnittdarstellung und in etwa derselben Orientierung wie in Figur 1, allerdings - genau wie Figur 3 - ohne einen umgebenden Staubsauger 10. In Figur 3 und Figur 4 ist auch erkennbar, dass die Filtereinheit 12 an ihrer Oberseite - bei der dargestellten Ausführungsform als einstückige Fortsetzung des Deckelteils 26 - eine Anschlusskontur in Form eines umlaufenden Rings aufweist. Mittels einer solchen oder ähnlichen Anschlusskontur wird die Position und die Ausrichtung einer in einen Staubsauger 10 eingesetzten und auf das Ansaugrohr 30 aufgesteckten Filtereinheit 12 fixiert und es wird die Einführtiefe des Ansaugrohrs 30 in den Innenraum im Inneren des Filtermediums 14 begrenzt. Es wird also begrenzt, wie weit die Filtereinheit 12 auf das Ansaugrohr 30 aufgesteckt werden kann. Auf diese Weise ist gewährleistet, dass stets ein ausreichender Abstand zwischen einer Oberkante des Ansaugrohrs 30 und dem ringförmigen Element 32 verbleibt. Dies gewährleistet die Drehbarkeit des Abstreifers 24. Darüber hinaus komplettiert ein solches Deckelteil 26 mit seiner Anschlusskontur einen Teil des in Figur 1 gezeigten Staubraums des Staubsaugers 10, so dass der Staubraum bei einer eingesetzten Filtereinheit 12 luftdicht nach außen verschlossen ist.

Einzelne im Vordergrund stehende Aspekte der hier vorgelegten Beschreibung lassen sich damit kurz wie folgt zusammenfassen: Angegeben werden eine Filtereinheit 12 für einen Staubsauger 10 und ein Staubsauger 10 mit einer solchen Filtereinheit 12, mit einer speziellen Gestaltung des Filtermediums 14 und einer speziellen Lagerung des als Abreingungsmechanismus fungierenden Abstreifers 24, wobei die Filtereinheit 12 ein zylindrisch geformtes und Falten 20 aufweisendes Filtermedium 14 sowie an einer drehbar gelagerten Achse 16 Mittel 18 zum Abreinigen der Falten 20 umfasst, wobei die Achse 16 nur einseitig in einem die Filtereinheit 12 abschließenden Deckelteil 26 gelagert ist und wobei an einem freien Ende der Achse 16 ein ringförmiges und sich an den Innenseiten des Filtermediums 14 abstützendes Element 32 als zweite Lagerstelle der Achse 16 fungiert.

### Bezugszeichenliste

- 10: Staubsauger
- 12: Filtereinheit
- 14: Filtermedium
- 16: Achse (des Abstreifers)
- 18: Abstellung (des Abstreifers) / Abreinigungselement
- 20: Falte (des Filtermediums)
- 22: Auffangbereich (im Staubsauger)
- 24: Abstreifer
- 26: Deckelteil (der Filtereinheit)
- 28: Bodenring (der Filtereinheit)
- 30: reinluftseitiges Luftleitelement / Ansaugrohr
- 32: ringförmiges Element (am freien Ende des Abstreifers)
- 34: Stirnrad

## Patentansprüche

1. Filtereinheit (12) für einen Staubsauger (10),
wobei die Filtereinheit (12) ein zylindrisch geformtes und Falten (20) aufweisendes Filtermedium (14) sowie an einer drehbar gelagerten Achse (16) Mittel (18) zum Abreinigen der Falten (20) umfasst,
**dadurch gekennzeichnet, dass**
die Achse (16) nur einseitig in einem die Filtereinheit (12) abschließenden Deckelteil (26) gelagert ist und
dass an einem freien Ende der Achse (16) ein ringförmiges und sich an den Innenseiten des Filtermediums (14) abstützendes Element (32) als zweite Lagerstelle der Achse (16) fungiert.

2. Filtereinheit (12) nach Anspruch 1, mit einem dem Deckelteil (26) gegenüberliegenden offenen oder zumindest im Wesentlichen offenen Bodenbereich.

3. Filtereinheit (12) nach Anspruch 2, mit einem Bodenring (28) im Bodenbereich, wobei der Bodenring (28) einerseits zur Fixierung der Falten (20) im Bodenbereich und andererseits als Dichtelement zum luftdichten Anschluss der Filtereinheit (12) an ein reinluftseitiges Luftleitelement (30) eines Staubsaugers (10) fungiert.

4. Filtereinheit (12) nach Anspruch 1 oder 2,
wobei das ringförmige Element (32) aus zumindest zwei kreissektorförmigen Abschnitten in unterschiedlichen Ebenen gebildet ist.

5. Filtereinheit (12) nach Anspruch 1, 2 oder 3,
mit einem mit der Achse (16) verbundenen, insbesondere einstückig verbundenen Stirnrad (34) zum Antrieb der Achse (16).

6. Filtereinheit (12) nach einem der vorangehenden Ansprüche,
mit einem Filtermedium (14) mit einer geschlossenen Plissierung.

7. Staubsauger (10) mit einer Filtereinheit (12) nach einem der vorangehenden Ansprüche und einem unterhalb der Filtereinheit (12) gebildeten Auffangbereich (22) für vom Filtermedium (14) abgereinigten Staub.

8. Staubsauger (10) nach Anspruch 3 und Anspruch 7, wobei die Filtereinheit (12) mit ihrem Bodenring (28) auf das reinluftseitige Luftleitelement (30) aufsteckbar oder aufgesteckt ist.

## Claims

1. Filter unit (12) for a vacuum cleaner (10), the filter unit (12) comprising a filter medium (14) which is cylindrically shaped and has folds (20), and comprising, on a rotatably mounted shaft (16), means (18) for cleaning the folds (20), **characterised in that** the shaft (16) is mounted only at one end in a cover part (26) which closes the filter unit (12) and **in that**, at a free end of the shaft (16), an annular element (32) which is supported on the inner sides of the filter medium (14) acts as a second mounting point for the shaft (16).

2. Filter unit (12) according to claim 1, comprising a base region which is opposite the cover part (26) and is open or at least substantially open.

3. Filter unit (12) according to claim 2, comprising a base ring (28) in the base region, wherein the base ring (28) acts to fix the folds (20) in the base region and acts as a sealing element for connecting the filter unit (12) to a clean-air-side air guiding element (30) of a vacuum cleaner (10) in an airtight manner.

4. Filter unit (12) according to either claim 1 or claim 2, wherein the annular element (32) is formed of at least two sector-shaped portions in different planes.

5. Filter unit (12) according to claim 1, claim 2 or claim 3, comprising a spur gear (34) which is connected, in particular integrally connected, to the shaft (16), for driving the shaft (16).

6. Filter unit (12) according to any of the preceding claims, comprising a filter medium (14) which has closed pleating.

7. Vacuum cleaner (10) comprising a filter unit (12) according to any of the preceding claims and a collecting region (22) formed below the filter unit (12) for dust that has been cleaned off the filter medium (14).

8. Vacuum cleaner (10) according to claim 3 and claim 7, wherein the filter unit (12) can be plugged or is plugged by the base ring (28) thereof onto the clean-air-side air guiding element (30).

## Revendications

1. Unité de filtre (12) pour aspirateur (10), l'unité de filtre (12) comprenant un milieu filtrant (14) présentant une forme cylindrique et un pli (20) ainsi qu'un moyen (18) au niveau d'un axe (16) monté en rotation servant à nettoyer les plis (20), **caractérisé en ce que** l'axe (16) est monté uniquement d'un côté dans une partie de couvercle (26) fermant l'unité de filtre (12) et **en ce que**, à une extrémité libre de l'axe (16), un élément d'appui annulaire (32) et reposant sur les côtés intérieurs du milieu filtrant (14) sert de second point d'appui de l'axe (16).

2. Unité de filtre (12) selon la revendication 1, comprenant une zone de fond opposée à la partie de couvercle (26), ouverte ou au moins sensiblement ouverte.

3. Unité de filtre (12) selon la revendication 2, comprenant un anneau de fond (28) dans la zone de fond, dans laquelle l'anneau de fond (28) sert d'une part de fixation pour les plis (20) dans la zone de fond et d'autre part d'élément d'étanchéité pour le raccordement étanche à l'air de l'unité de filtre (12) à un élément de guidage d'air (30) côté air filtré d'un aspirateur (10).

4. Unité de filtre (12) selon la revendication 1 ou 2, dans laquelle l'élément annulaire (32) est constitué d'au moins deux sections en forme de secteur circulaire dans des plans différents.

5. Unité de filtre (12) selon la revendication 1, 2 ou 3, comprenant un engrenage droit (34) relié à l'axe (16), en particulier relié de manière intégrée à celui-ci, pour entraîner l'axe (16).

6. Unité de filtre (12) selon l'une des revendications précédentes, comprenant un milieu filtrant (14) comportant un plissage fermé.

7. Aspirateur (10) comprenant une unité de filtre (12) selon l'une des revendications précédentes et une zone de collecte (22) formée en dessous de l'unité de filtre (12) pour la poussière nettoyée par le milieu filtrant (14).

8. Aspirateur (10) selon la revendication 3 et la revendication 7, dans lequel l'unité de filtre (12), conjointement avec son anneau de fond (28), peut être emboîtée ou est emboîtée sur l'élément de guidage d'air (30) côté air filtré.
